# EUROPEAN PATENT SPECIFICATION

(11) **EP 1 586 474 B1**
(45) Date of publication and mention of the grant of the patent: **13.05.2009**
(21) Application number: 04381003.5
(22) Date of filing: 12.03.2004
(51) Int. Cl.: B60J 5/04

(54) **Door module and procedure for installing this module**
Türmodul und Verfahren zu dessen Einbau
Module de portière et méthode d'installation

(43) Date of publication of application: 19.10.2005
(73) Proprietor: GRUPO ANTOLIN-INGENIERIA, S.A., 09007 Burgos (ES)
(72) Inventor: Nunez Subinas, Valerio, 09006, Burgos (ES)
(74) Representative: Capitan Garcia, Maria Nuria

(56) References cited:
- FR-A- 2 776 965
- JP-A- 2004 036 210
- US-A- 6 029 403
- US-B1- 6 571 515

## Description

### OBJECT OF THE INVENTION

The present invention refers to a door module according to the preamble of claim 1, and to a procedure for installing this module according to claims 17 and 19. A door module of that type is known from FR 2776965 A.

The present invention also consists of an installation procedure based on the use of different technical solutions for the fastening means both of the module and of the window regulator guides, so that its installation is possible without visual access, primarily in the lower area of the module on a production line.

The means used to achieve efficient installation in terms of fitting times and ease of handling are based on the use of fastening means and of pre-fitted bolts in the lower fastenings. The spacers present a special design and establish a distance during installation between the window regulator guides and the door module.

### BACKGROUND OF THE INVENTION

The installation of the different components was traditionally carried out separately so that each of the components has to be fastened in its final position, where it is necessary to have both physical access to be able to carry out the union and visual access for the operator to be able to work properly.

This type of installation has been improved by making use of installation modules in such a way that different components, which are later handled as a single object are pre-installed on these modules, and they are, in turn, installed as a whole in the final position. One of these modules is the door module.

The door module has an added drawback when it comes to fitting the window regulator guides, besides different components, such as the lock or wiring.

The window regulator guides require sufficiently strong means of attachment to the door frame so as to be able to withstand the stress to which they are subjected and, in turn, they have considerable limitations with regard to their positioning and location in the door box imposed by size, shape and window movement.

In addition, if the window regulator guides are fitted in the door module, in the installation of the module on the door the guides are hidden by the actual module, so that the operator has to carry out the installation without having visual access and time is lost, which gives rise to a very considerable increase in the costs of installation on the production line.

To overcome drawbacks of this in part there are familiar solutions based on pressings that produce shapes which facilitate the alignment of the parts to be connected up.

There is a well-known patent, with publication number JP002103982, which describes and protects a method of self-alignment consisting of the use of notches or undercuts in the door frame. In this patent a door module including a window regulator is not incorporated but the window regulator is only fitted in such a way that visual access to all parts of the window regulator assembly is maintained at all times.

When the window regulator is pre-installed in the module, the end position of the guides in relation to the module prevents the installation of the module in the door frame. The way of overcoming this installation problem, consists of establishing a larger distance between the window regulator guides and the module at the time of fitting and then proceeding to its final fastening. The simplest way consists of maintaining a partial fastening of the guides, with the result they are practically loose and therefore have great mobility; yet, without visual access to the guides their positioning and final fastening proves very awkward.

There is a well-known patent, with publication number US6029403, which proposes a particular solution to the problem. The patent describes connecting means between the window regulator guides and the door module that include a spacer or distance piece consisting of a tab defined as an extension of the actual support bushing. This tab keeps the window regulator guide separated as far as a point determined by the screw in such a way that at the time of installation there is a temporary distance between the guide and the module. The tightening of the retaining screws reduces this distance down to its final position, at the same time destroying the tab.

The destruction of the tab means that this module only permits a single operation, with no possibility of correction, as the procedure is irreversible. The same invention contemplates the use of a strip protruding from the actual guide as a distance piece.

It is important to observe that this solution is only applicable when the module is structural, as the window regulator is fastened directly onto the module and does not permit installation without there being visual access free of complications during positioning.

The present invention consists of a door module with an installation procedure based on the use of different connection and separation solutions which facilitate fitting without visual access with door modules that are not necessarily structural.

### DESCRIPTION OF THE INVENTION

The present invention refers to a door module and the installation procedure for this module based on the use of different means for the anchoring, self-alignment and temporary separation of the window regulator guides in respect of the door module, as well as the door module used.

The door module to be installed corresponds to the trim, where this has a cable type window regulator system pre-fitted, besides other functional elements of the vehicle door, such as the lock, the wiring, the impact energy absorbing elements and other items.

The window regulator guides are longer than the span of the opening in which they enter an opening which is covered by the door module on which they are pre-installed. This greater length prevents front installation of the module that incorporates these guides, so that the guides have to get past the opening in the door in some way.

To get past this opening, during installation there has to be a distance between the window regulator guides and the door module which will allow the guides to enter without there being any mechanical interference between the elements. After reducing this temporary distance, the module is then connected to the door.

There are door layouts in which the box is subject to greater space limitations, such as some rear doors for example, in which case the window regulator guides do not enter the box at the top but rest externally for subsequent fastening. The concealing of the screwing means may call for the use, for instance, of an external embellisher.

The procedure of the present invention starts off from a module that incorporates the window regulator guides with means of connection separate from the means of separation or distance pieces, separating means in which there is at least one spacer. Preferably two spacers are used, one upper and one lower one.

In addition, this door module is provided with the lower fastening means pre-fitted and notches in the door structure which will assist the alignment of the module.

Initially, the spacers define a distance that allows the guides to enter the opening in the door.

In the first case, when the upper and lower ends of the guides are set in place on the inside of the box, in this guide separation position the door module is offered up to the door by tilting it slightly so that the window regulator guides enter the upper part of the door box. Once the top part of the window regulator guides has entered, the distance of the upper spacers is reduced to allow the door module to come right up to the door. In the second case the top ends of the guides simply rest at their upper end on the outside face, while the low end is also set in place inside the door box.

At the bottom of the door there are V-shaped notches to receive a bolt pre-fitted in the module. The pre-fitted bolt passes through the door module and reaches the bottom end of the window regulator guide to which it is secured by means of a rear nut integral with the guide.

A large section of the threaded stud of the pre-fitted bolt remains accessible between the guide and the door module. This section of threaded stud is intended to rest on the V-shaped notch in the door. The V shape permits the self-centring of the module without visual access and the pressure of the bolt leads to the reduction of the distance between the window regulator guides and the module until gripping the door plate, with the result that the assembly is fastened at the bottom without any visual access being required.

The weakening entailed in the use of a V-shaped notch is strengthened by the fitting of a reinforcement bushing between the door module and the door plate. This bushing is also pre-installed and it is set in place on the bolt between the module and the guide when these are not yet in position on the V-notch.

The insertion and positioning of the lower part of the module with the pre-installed bolt on the V-notch is simple because of the converging shape which always guides the bolt towards the narrower bottom position.

This lower part does not require visual access, yet it is considered that the upper part does on account of the presence, for instance, of a folding embellisher, enabling the upper fastenings to be screwed up to their end position.

It is then possible to fasten the bottom part of the module as the pre-fitted bolt is already in the right position.

The installation kinematics is predetermined by the position of the window regulator guides in the door box. In a first case, both the upper and the lower ends go inside the door box, forcing an initial entry of the upper ends; and in a second case the lower ends are kept inside while the upper ends simply remain outside.

This procedure makes use of upper and lower spacing means independent of the connecting means, the latter pre-installed in the door module at the bottom. The spacing means used also form part of the object of this invention.

### Spacing means

Amongst the spacing means we are going to consider two groups, one based on recesses and the other based on neckings, as described below.

The former group makes use of recesses which are no more than open prismatic receptacles that have the inner face of the module panel as the base. In an initial version of the invention the recess houses an elastic block, for example a foam block.

Furthermore, the window regulator guide has a leg with the flat end designed to rest on the elastic block.

The support of the block on the elastic block establishes the spacing between the window regulator guide and the module. The elastic block and the temporary spacing disappear either by exerting the right pressure or else manually or by the actual tightening of the screws.

A second version of the spacer with recesses makes use of recesses with the elastic block outside the recess. In this case the only function of the guide leg is for the correct positioning of the guide in relation to the door module, as it is the guide which rests directly on the elastic block.

This support is possible as the elastic block is situated outside the recess. It may rest on support ribs or directly on the inner face of the module, leaving a perforation for the leg to pass through, and it extends until reaching the guide.

When pressure is exerted on the elastic block, this gives way and is compressed, mainly by elastic deformation, between the surface where it rests and the window regulator guide. This deformation may be considered reversible as it has to be capable of being refitted a number of times, typically five.

The second group of spacers is based on the use of a necking. In this case use is made of a recess open on one of its sides by way of a longitudinal channel necked near the end opposite the base. Adjacent outer cavities, which enable the necking formed of two elastic elements to be defined, as their section is reduced by the outer cavities, coincide at this necking.

On the window regulator guide side a leg issues from it with a tab at its end. The leg slides along the inside of the recess so that the tab is guided by the necked channel in the recess.

The tab is impeded by the necking and can only pass through it by overcoming the resistance of the flexible elements located at either end that define the necking.

With this layout two relative positions are established between the guide and the module, the first one, which corresponds to when both are separated by a distance for installation purposes, and the second, when they are closest, which corresponds to the situation defined after installation.

To go from one position to the other, it is necessary to overcome the effort entailed in the tab passing through the necking, so that it is an arrangement that gives rise to a fully reversible spacer. Once the guide has approached the module, there is a possibility of moving it away again back to the initial position by merely exerting the necessary separating force.

This type of spacer is more appropriate for the upper position as, after going from a remote position to the close-up position, it is not necessary to maintain the effort and permits the connection of the upper part of the guides without having to bother about maintaining this effort.

Furthermore, the spacers that make use of elastic blocks may preferably be used in the lower area, as the distance is maintained all the time by the pre-installed bolt and in this case it is even advisable for a separating force to be exerted all the time.

In either case the legs that are used to enter the recesses may be additional pieces welded to the guides or else they may be portions of plate cut and bent suitably to form the leg.

### DESCRIPTION OF THE DRAWINGS

The present descriptive report is supplemented with a set of drawings illustrating the preferred examplary specimen embodiment and never limiting the invention.
- Figure 1 shows a diagram of the section of a door where we may make out the door box, the door module with the spacers according to the invention, and details of the trim.
- Figure 2 is a diagram of the section of a spacer according to a first specimen embodiment of the invention which incorporates the elastic block in the recess.
- Figure 3 is a diagram of the section of a spacer according to a second specimen embodiment of the invention which incorporates the elastic block outside the recess.
- Figure 4 is perspective view of a section of the window regulator guide with the leg that reaches a spacer according to a third specimen embodiment of the invention. This third example makes use of a necking.
- Figure 5 is a perspective view of the detail of the connection between the lower part of the window regulator guide and the door module by means of a pre-installed bolt, where we see the support of the elastic block of the independent spacer on its ribbed recess.
- Figure 6 is a close view of the door in which we observe the opening on which the door module is installed and which includes two V-notches, at the bottom with an enlarged detailed view, either centred or slanted, for the self-alignment of the pre-installed module bolt.
- Figure 7 comprises a double diagram of the section of a door: the first is a copy of the diagram shown in Figure 1 and the second shows the version in which the window regulator guide rests externally on the door.

### DETAILED EXPLANATION OF MODES OF EMBODIMENT

The present invention consists of a door module and the procedure for installation of this module based on a set of operations making use of different technical solutions applicable at the connection points between the window regulator guides and the door module. These connection means are independent of specially designed spacers that enable a temporary distance to be established, during installation only, between the window regulator guides and the door module so that its correct entry is possible at the time of the operation.

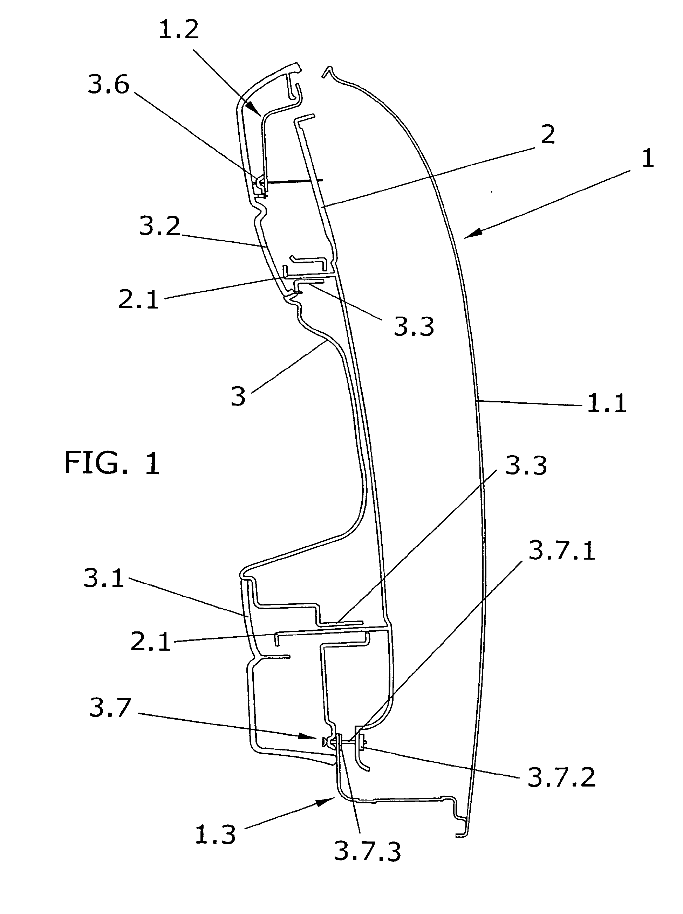

Before describing the installation procedure used in the different examples of embodiment of the invention, the elements involved in the operation and represented in a diagrammatic section in figure 1 are indicated.

In this section we observe the door (1) composed of an outer face (1.1) and another inner one (1.2), the latter incorporating the opening where the door module (3) is fixed. The access opening to the internal door cavity (1) housing, in particular, at least one of the ends of the window regulator guide (2) pre-installed in the module (3).

In this same section we observe that the height of the window regulator guide (2) is greater than the height of the opening that gives access to door opening or cavity (1).

The window regulator guides (2) are connected to the door frame (1) at both their upper and lower ends with means represented diagrammatically in this figure 1. The window regulator guides (2) may increase the gap that they maintain with the door module (3) temporarily thanks to spacers (3.3) in order to facilitate the entry manoeuvre,

The door module (3), therefore, consists mainly of pre-installed bolt (3.7.1) matching up with the bottom of each window regulator guide (2) which forms the lower fastening, and one or more spacer elements separate from the fastening means, which may have different layouts.

With these essential elements, which will be described later on with the assistance of the other figures, the installation procedure according to the present invention consists of the following stages depending on the layout of the door on which it is installed:
- The window regulator guides (2) pre-installed on the door module (3) are separated by means of the spacer (3.3) or spacers (3.3.), if two are used, one upper and the other lower.

When both ends of the window regulator guide (2) are set in place inside:
- The door module (3) is offered up to the door (1) by tilting the upper part of the module to insert first of all the upper ends of the window regulator guides (2) into the door cavity (1).
- The door module (3) is raised slightly with the upped ends of the window regulator guides (2) already inside the door cavity (1) until the lower ends of the window regulator guides (2) can be inserted by manoeuvring them over the top of the bottom edge (1.3) of the opening that gives access to the door cavity (1).

- Should two spacers (3.3), one upper and the other lower, be used, the upper one is compressed until the separating distance is reduced to the final distance.
- The door module (3) is lowered until the pre-installed bolt (3.7.1) at the bottom connection of the door module (3) rests on the lower edge (1.3) of the access opening to the door cavity (1), where the straight or slanted V-notches (1.3.1) are located that receive them and guide them to their final position.
- The upper ends are positioned in the area corresponding to the upper fastenings.

When the upper ends of the window regulator guide (2) are in place on the outside:
- The door module (3) is offered up to the door by tilting the upper part of the module (3) towards the operator and lowering it to insert the lower ends of the window regulator guides (2) into the inside of the door box until the pre-installed bolt (3.71.) in the lower connection of the door module (3) rests against the lower edge (1.3) of the access opening to the door cavity (1), where the straight or slated V-notches are located that receive and guide them down to the final position.
- The upper ends are positioned in the area corresponding to the upper fastenings

Lastly, in both cases:
- The upper connections (3.6), now correctly positioned and visually accessible thanks to a fold-down trim element (3.2) are tightened up.
- Once set in their installation position, the lower connections (3.7) are tightened up, so that the spacers (3.3) are compressed at the same time until the window regulator guides (2) reach their final position.

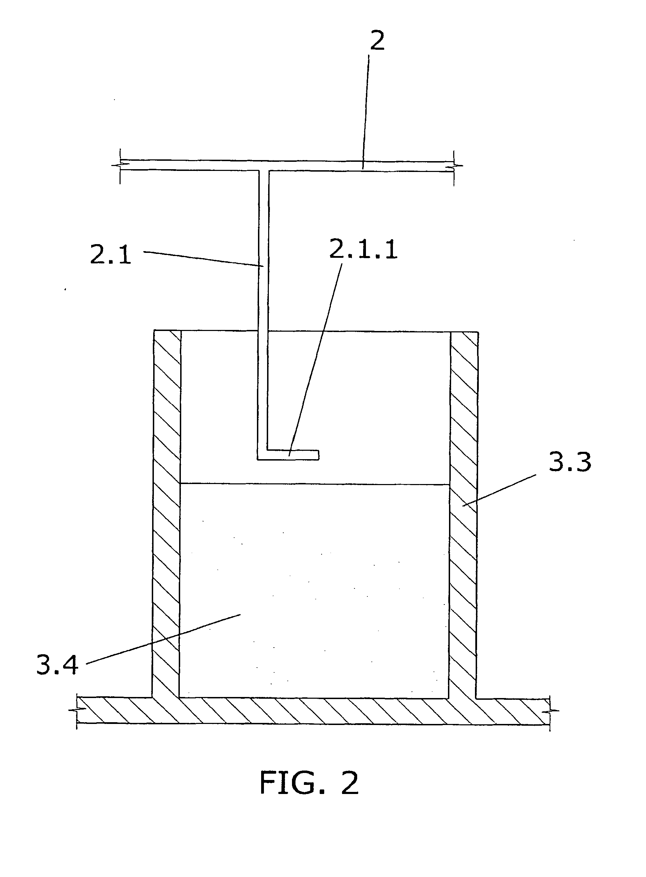

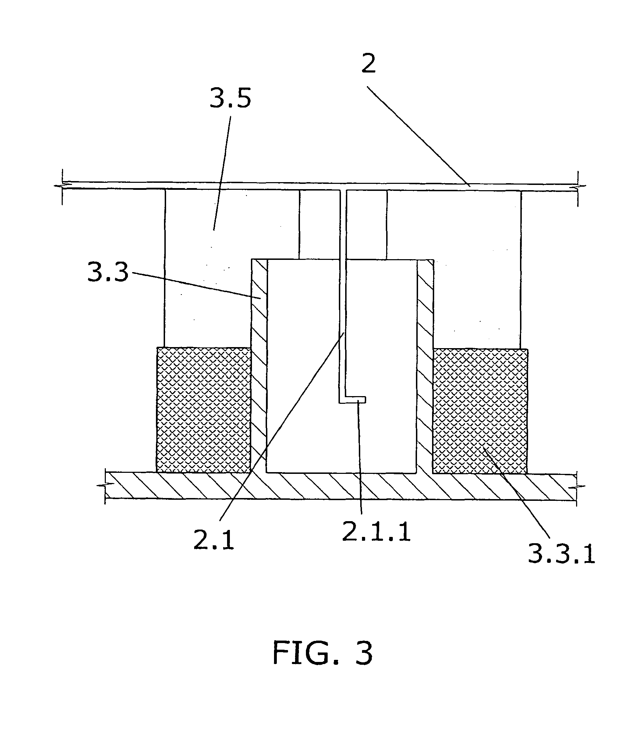

Figures 2 and 3 show the two spacers (3.3.) based on recesses with an elastic block (3.4, 3.5). Figure 2 corresponds to the spacer (3.3) consisting of a recess or a prismatic body open at the top with a built-in elastic block (3.4).

The upper part of figure 2 shows a section of the window regulator guide (2) with the leg (2.1) that enters the recess where there is a fold at the end that defines a flat support (2.1.1) against the outer surface of the elastic block (3.4).

Figure 3 is a second embodiment of this spacer (3.3) in which the recess has a set of ribs (3.3.1) on the outside on which rests the elastic block (3.5), also located outside the recess. In this case the elastic block (3.5) is perforated in the middle to allow the leg (2.1) of the guide (2) to pass through, with its end (2.1.1) also folded to fulfil the function of guiding or relative positioning between the guide (2) and the door module (3).

In this case, it is not the guide leg (2.1) that presses on the elastic block (3.5) but it is the guide (2) that rests directly on the block and compresses it.

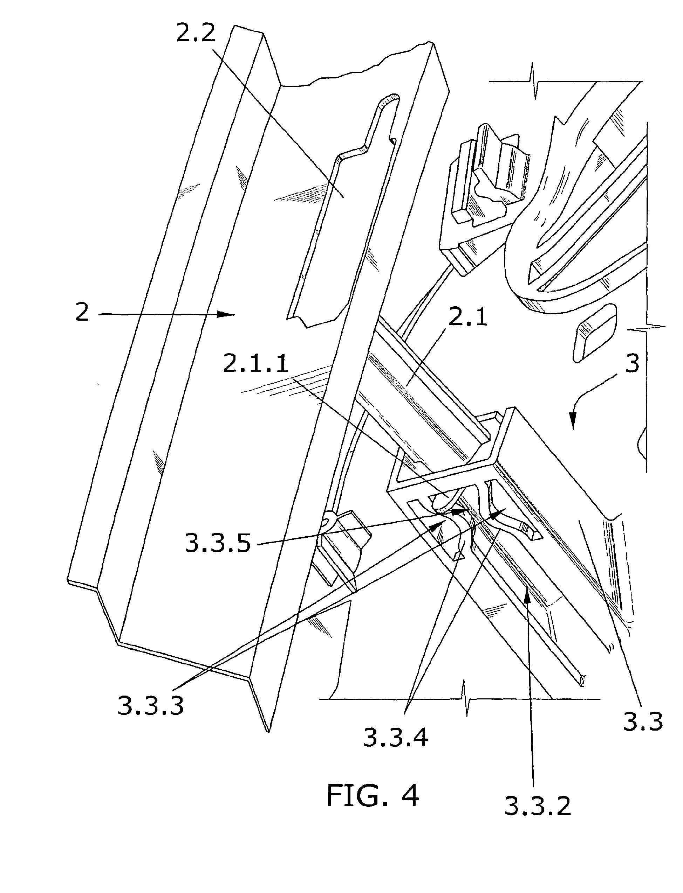

Figure 4 represents a perspective view of a third embodiment of the spacers (3.3). This example consists of a recess or open prismatic body that includes a channel (3.3.2) with a necking (3.3.5) on one of its sides. The necking (3.3.5) has cavities (3.3.3) externally on either side that make the sides flexible sections (3.3.4).

Inside the channel (3.3.2) a tab (2.1.1) runs from the end of the leg (2.1) of the window regulator guide (2). This tab (2.1.1) is at either end of the necking (3.3.5) and it is necessary to apply a force to overcome the resistance of the flexible sections (3.3.4) of the necking (3.3.5). In this way, the spacer establishes two possible positions: the separation position between the window regulator guide (2) and the door module (3), and a closer position. The shift from one position to the other requires a certain force to be applied, and this shift is reversible. This reversibility enables the window regulator guides (2) to be separated from the module (3) again during installation to make a fresh attempt to install the module (3) in the door (1).

This same figure 4 shows the cavity (2.2) that is left by the leg (2.1) when this is obtained by means of partial die-stamping, which enables it to be shaped by bending.

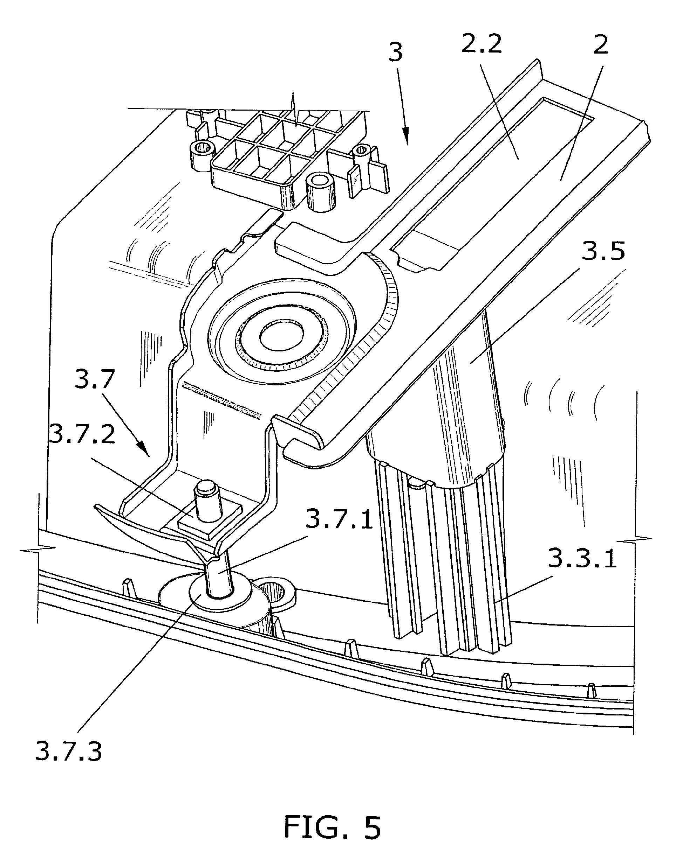

Figure 5 is a close perspective view of a lower section of the module (3) where the lower fastening of one of the window regulator guides (2) is located. In this same view we may observe a spacer (3.3) like the one described in the second example, where the elastic foam block (3.5) in this specimen embodiment is external and is located on ribs (3.3.1), also on the outside of the recess.

This fastening (3.7) is primarily made up of a pre-installed bolt inserted from the module (3). This bolt (3.7.1) extends beyond the bottom end of the window regulator guide (2). The spacer (3.3) establishes a section of threaded stud of the bolt (3.7.1) between the module (3) and the guide (2), which remains free. In this threaded section there is a bushing (3.7.3) which distributes the tightening pressure appropriately in the weakening that is produced by the notch (1.3.1) for the self-alignment of the bolt (3.71.) during the installation procedure. It may be further pointed out that it is in this free section of threaded stud where the support is established on the notch (1.3.1), leaving the door plate (1) interposed between the module (3) and the guide (2).

The end of the bolt (3.7.1) threads into a nut (3.7.2) integral with the guide and it is what enables the whole assembly to be tightened.

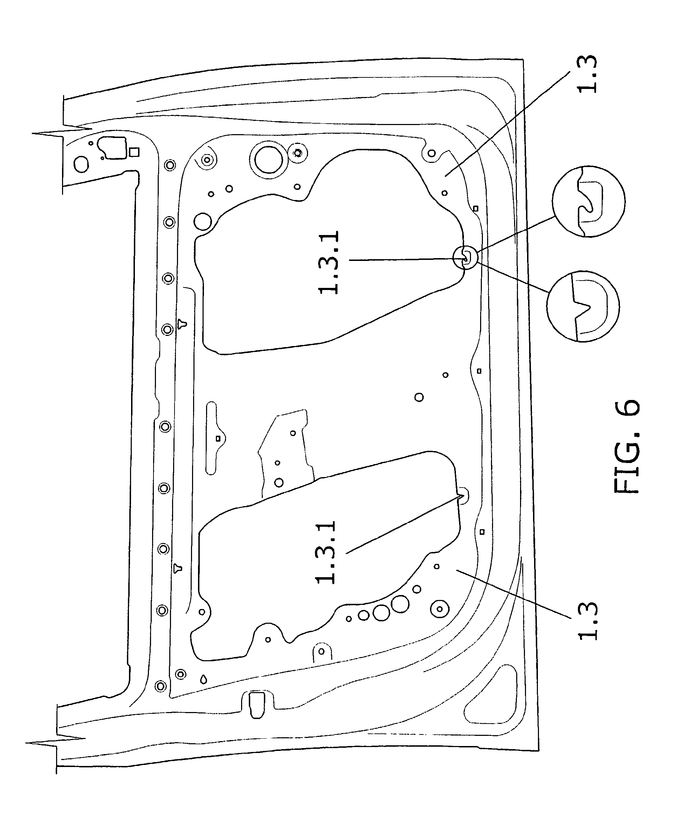

Figure 6 shows the door from the inner side with the lower notches (1.3.1) in the edge (1.3) of the outer opening which permit the positioning of the module (3), while two possible configurations of the notch, either straight or slanted V, are also shown in an enlarged view.

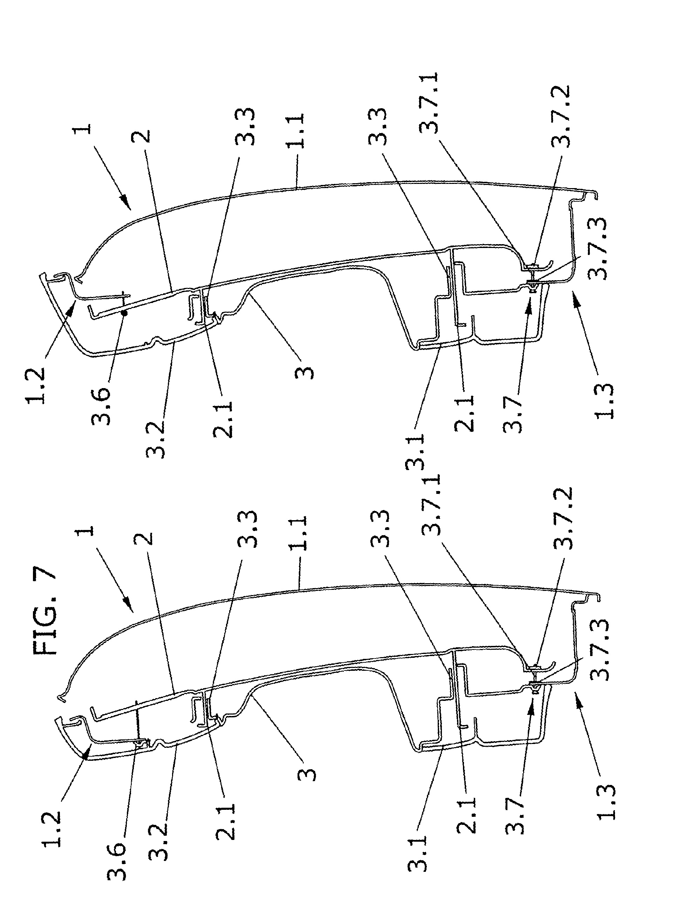

Figure 7 also represents part of the lower trim (3.1) which covers the lower connection not only in the case when the guide (2) rests on its upper end on the inside of the door cavity, but also in the case when the guide (2) rests on the outside. This close view, of the lower trim (3.1) is optional since the layout of the door module (3) may be such that the lower connection (3.7) is not accessible visually and then this trim (3.1) may be dispensed with. The solutions adopted therefore include means of self-alignment.

The connection (3.6) at the top is accessible by way of a folding element (3.2) in the trim, in the form of an embellisher for example.

Lastly, it should be pointed out that in this preferred embodiment it is considered more suitable to position the spacer (3.3), based on the use of a necking, in the upper part on account of its reversibility so that the installation procedure may be started again if necessary; and the first two examples of spacers (3.3) for the lower part. The first of the spacers permits manual shifting from one position to another, while the second ones meet the need to establish a separation distance that is hard to overcome, as the use of foams requires the controlled action of screwing up for their compression. However, this choice is suitable in this specimen embodiment of the module without it being a limitation, as any of the spacers may go at the top or bottom or even in the middle, if it is the only one.

Variations in materials, shape, size and layout of the component parts, described in a non-restrictive way, so that an expert may proceed to their reproduction, do not alter the essential nature of this invention.

## Claims

1. Door module (3) of the type incorporating different pre-installed components amongst, which include a cable type window regulator system with at least one guide (2) the module comprising :
• upper (3.6) and lower (3.7) means of connection to the door, where the lower means consist of components pre-installed in the module, which fasten the module and the lower part of the at least one door window regulator guide (2) to each other the module **characterised in that** it further comprises
• one or more temporary spacing means (3.3) between the main body of the module (3) and the at least one window regulator guide (2), these spacing means being separate from the connection means.

2. Door module according to claim 1, **characterised in that** the preinstalled components for the lower connection of the window regulator guide (2) and the main body of the module (3) onto the door consist of bolts (3.7.1), the end of which screws into a nut (3.7.2) integral with the bottom end of the window regulator guide (2), leaving a free section of threaded stud of the pre-installed bolt (3.7.1) in between for the sake of installation without visual access.

3. Door module according to claim 2, **characterised in that** the free section of threaded stud in the lower window regulator guide (2) connection means there is a bushing (3.7.3) for strengthening the area weakened by a notch located in the lower portion of the door frame (1.3.1) in which this section of threaded stud engages when mounted into the door.

4. Door module according to claim 1, **characterised in that** the spacing means (3.3) situated between the window regulator guide (2) and the main body of the door module (3) consists of an open prismatic recess formed on the actual main body of the module (3) which houses an elastic block (3.4) where the end (2.1.1) of a leg (2.1) that emerges from the window regulator guide (2) rests on this elastic block (3.4).

5. Door module according to claim 4, **characterised in that** the end of the leg (2.1) that emerges from the guide (2) is folded sensibly parallel to the guide.

6. Door module according to claim 1, **characterised in that** the spacing-means (3.3) between the window regulator guide (2) and the main body of the door module (3) consists of an open prismatic recess formed on the actual main body of the module (3) on which there is situated a perforated elastic block (3.5), set in place on the outside of the recess, which permits the passage of a leg (2.1) that emerges from the guide (2) as a guiding means, while the elastic block (3.5) on which the guide (2) rests establishes the gap between the window regulator guide (2) and the main body of the door module (3).

7. Door module according to claim 6, **characterised in that** the elastic block (3.5) rests on the main body of the module.

8. Door module according to claim 6, **characterised in that** the elastic block (3.5) rests on outer ribs located on the prismatic recess.

9. Door module according to claim 6, **characterised in that** the end of the leg (2.1) which emerges from the guide (2) is folded.

10. Door module according to claim 1, **characterised in that** the spacing means (3.3) between the window regulator guide (2) and the main body of the door module (3) consists of an open prismatic recess formed on the actual main body of the module (3) with a lateral channel (3.3.2) presenting a necking (3.3.5). This channel (3.3.2) is intended for the passage of a tab (2.1.1) integral with the end of the leg (2.1) of the window regulator guide (2), in such a way that the necking (3.3.5) offers resistance to the passage of the tab (2.1.1) from one end to the other, defining two relative positions between the guide (2) and the main body (3) of the module: apart from and near to each other, respectively.

11. Door module according to claim 10, **characterised in that** the necking (3.3.5) presents cavities (3.3.3) on either side which give rise to flexible sections (3.3.4) in respect of the passage of the tab (2.1.1).

12. Door module according to claim 1, **characterised in that** the legs (2.1) that emerge from the window regulator guide (2) to operate with the spacing means (3.3) are formed by the partial die-stamping of a portion of the guide body (23) and its subsequent folding.

13. Door module according to claim 1, **characterised in that** at least one window regulator guide makes use of a single spacing means (3.3).

14. Door module according to claim 1, **characterised in that** at least one window regulator guide makes use of two spacing means (3.3), one upper and the other lower.

15. Door module according to claim 14, **characterised in that** the upper spacing means (3.3) consists of a necking and the lower one of an outer or inner elastic block (3.4, 3.5).

16. Door module according to claim 1, **characterised in that** a window regulator guide (2) is fixed by means of a connection (3.6, 3.7) bolted to the door (1).

17. Procedure for installing a door module according to claim 1, **characterised in that** the module is installed on the access opening to the door cavity by setting the window regulator guides (2) in place inside the door in their final or operating position according to the following stages:
• starting from a position of the pre-installed at least two window regulator guides (2) on the door module (3), separated from the main body of the dar module by means of one or two temporary spacing means, if two are used, one upper and the other lower, said spacers (3.3) operating independently from the connection means,
• The door module (3) is offered up to the door (1) by tilting the upper part of the module (3) to insert first of all the upper ends of the window regulator guides (2) into the door cavity (1).
• The door module (3) is raised slightly with the upped ends of the window regulator guides (2) already inside the door cavity (1) until the lower ends of the window regulator guides (2) can be inserted by manoeuvring them over the top of the bottom edge (1.3) of the opening that gives access to the door cavity (1).
• Should two spacers (3.3), one upper and the other lower, be used, the upper one is compressed until the separating distance is reduced to the final distance.
• The door module (3) is lowered until pre-installed bolts (3.7.1) at the bottom connection points of the door module (3) rest on the lower edge (1.3) of the access opening to the door cavity (1), where the straight or slanted V-notches (1.3.1) are that receive them and guide them to their final position.
• The upper connections (3.6), now correctly positioned, are then tightened up.
• Once set in their installation position, the lower connections (3.7) are tightened up, so that the spacers (3.3) are compressed at the same time until the window regulator guides (2) reach their final position.

18. Procedure for installing a door module according to claim 17, **characterised in that** the upper connections (3.6) are visually accessible thanks to a folding trim element (3.2).

19. Procedure for installing a door module according to claim 1, **characterised in that** the module is installed on the access opening to the door cavity (1) by setting the window regulator guides (2) in place in their final or operating position with the lower ends of the guides (2) on the inside of the door cavity (1) and the upper ends of the guides (2) on the outside of the door cavity (1), according to the following stages:
starting from from a position of the pre-installed of least two window regulator guides (2) on the door module (3), separated from the main body of the dar module by means of one or two temporary spacing means, (3.3), if two are used, one upper and the other lower, said spacers (3.3) operating independently from connection means,
• The door module (3) is offered up to the door (1) by tilting the upper part of the module (3) towards the operator and lowering it to insert the lower ends of the window regulator guides into the inside of the door box until the pre-installed bolt (3.7.1) in the lower connection of the door module (3) rests against the lower edge (1.3) of the access opening to the door cavity (1), where the straight or slated V-notches (1.3.1) are located that receive and guide them down to the final position.
• The upper ends are positioned in the area corresponding to the upper fastenings
• The upper connections (3.6), now correctly positioned, are then tightened up.
• The lower connections (3.7) are tightened up, without visual access but suitably guided so that the spacers (3.3) are compressed at the same time until the window regulator guides (2) reach their final position.

20. Procedure for installing a door module according to claim 19, **characterised in that** the upper connections (3.6) are visually accessible thanks to a folding trim element (3.2).

## Patentansprüche

1. Türmodul (3) der Art, die verschiedene vorinstallierte Komponenten beinhaltet, die ein Seil-Fensterhebersystem mit mindestens einer Führung (2) einschließen, wobei das Modul umfasst:
• obere (3.6) und untere (3.7) Mittel zur Befestigung an der Tür, wobei die unteren Mittel aus im Modul vorinstallierten Komponenten bestehen, die das Modul und das Unterteil der mindestens einen Tür-Fensterheberführung (2) untereinander befestigen, wobei das Modul **dadurch gekennzeichnet ist, dass** es weiterhin umfasst
• ein oder mehrere zeitweilige Abstandsmittel (3.3) zwischen dem Hauptkörper des Moduls (3) und der mindestens einen Fensterheberführung (2), wobei diese Abstandsmittel von den Befestigungsmitteln getrennt sind.

2. Türmodul nach Anspruch 1, **dadurch gekennzeichnet, dass** die vorinstallierten Komponenten für die untere Verbindung der Fensterheberführung (2) und des Hauptkörpers des Moduls (3) an der Tür aus Bolzen (3.7.1) bestehen, deren Ende in eine am unteren Ende der Fensterheberführung (2) angebrachte Mutter (3.7.2) eingeschraubt ist, so dass ein freier Gewindebolzenabschnitt des vorinstallierten Bolzens (3.7.1) für eine Installation ohne Sicht im Zwischenraum verbleibt.

3. Türmodul nach Anspruch 2, **dadurch gekennzeichnet, dass** auf dem freien Abschnitt des Gewindebolzens der unteren Verbindungsmittel der Fensterheberführung (2) eine Scheibe (3.7.3) zur Verstärkung des durch eine im Unterteil des Türrahmens (1.3.1) vorhandene Kerbe geschwächten Bereichs aufgesetzt ist, in welche dieser Abschnitt des Gewindebolzens beim Einbau in die Tür einrastet.

4. Türmodul nach Anspruch 1, **dadurch gekennzeichnet, dass** das zwischen der Fensterheberführung (2) und dem Hauptkörper des Türmoduls (3) angeordnete Abstandsmittel (3.3) aus einer offenen, am eigentlichen Hauptkörper des Moduls (3) gebildeten prismatischen Aussparung besteht, die einen elastischen Block (3.4) aufnimmt, wobei das Ende (2.1.1) eines Schenkels (2.1), der von der Fensterheberführung (2) absteht, auf diesem elastischen Block (3.4) aufliegt.

5. Türmodul nach Anspruch 4, **dadurch gekennzeichnet, dass** das Ende des von der Führung (2) abstehenden Schenkels (2.1) im Wesentlichen parallel zu der Führung abgebogen ist.

6. Türmodul nach Anspruch 1, **dadurch gekennzeichnet, dass** das Abstandsmittel (3.3) zwischen der Fensterheberführung (2) und dem Hauptkörper des Türmoduls (3) aus einer am eigentlichen Hauptkörper des Moduls (3) gebildeten offenen prismatischen Aussparung besteht, auf die auf der Außenseite der Aussparung ein durchbrochener elastischer Block (3.5) angebracht ist, der als Führungsmittel den Durchtritt eines von der Führung (2) abstehenden Schenkels (2.1) gestattet, wobei der elastische Block (3.5), auf dem die Führung (2) ruht, den Spalt zwischen der Fensterheberführung (2) und dem Hauptkörper des Türmoduls (3) hergestellt.

7. Türmodul nach Anspruch 6, **dadurch gekennzeichnet, dass** der elastische Block (3.5) auf dem Hauptkörper des Moduls aufliegt.

8. Türmodul nach Anspruch 6, **dadurch gekennzeichnet, dass** der elastische Block (3.5) auf äußeren Rippen an der prismatischen Aussparung aufliegt.

9. Türmodul nach Anspruch 6, **dadurch gekennzeichnet, dass** das Ende des von der Führung (2) abstehenden Schenkels (2.1) abgebogen ist.

10. Türmodul nach Anspruch 1, **dadurch gekennzeichnet, dass** das Abstandsmittel (3.3) zwischen der Fensterheberführung (2) und dem Hauptkörper des Türmoduls (3) aus einer offenen prismatischen Aussparung besteht, die am eigentlichen Hauptkörper des Moduls (3) ausgebildet ist, mit einem seitlichen Kanal (3.3.2), der eine Einschnürung (3.3.5) aufweist, wobei dieser Kanal (3.3.2) für den Durchtritt einer mit dem Ende des Schenkels (2.1) verbundenen Lasche (2.1.1) der Fensterheberführung (2) derart vorgesehen ist, dass die Einschnürung (3.3.5) dem Durchtritt der Lasche (2.1.1) von einem Ende zum anderen Widerstand entgegensetzt und so zwei relative Stellungen zwischen der Führung (2) und dem Hauptkörper (3) des Moduls definiert: voneinander entfernt bzw. aneinander angenähert.

11. Türmodul nach Anspruch 10, **dadurch gekennzeichnet, dass** die Einschnürung (3.3.5) Durchbrüche (3.3.3) auf beiden Seiten aufweist, durch die flexible Abschnitte (3.3.4) bezüglich des Durchtritts der Lasche (2.1.1) gebildet werden.

12. Türmodul nach Anspruch 1, **dadurch** gekenntzeichnet, dass die von der Fensterheberführung (2) abstehenden Schekel (2.1) zum Zusammenwirken mit dem Abstandsmittel (3.3) durch teilweises Pressen eines Teils des Führungskörpers (23) und nachfolgendes Biegen desselben gebildet werden.

13. Türmodul nach Anspruch 1, **dadurch gekennzeichnet, dass** mindestens eine Fensterheberführung ein einzelnes Abstandsmittel (3.3) verwendet.

14. Türmodul nach Anspruch 1, **dadurch gekennzeichnet, dass** mindestens eine Fensterheberführung zwei Abstandsmittel (3.3), ein oberes und ein unteres, verwendet.

15. Türmodul nach Anspruch 14, **dadurch gekennzeichnet, dass** das obere Abstandsmittel (3.3) aus einer Einschnürung und das untere aus einem äußeren oder inneren elastischen Block (3.4, 3.5) besteht.

16. Türmodul nach Anspruch 1, **dadurch gekennzeichnet, dass** eine Fensterheberführung (2) mit Hilfe eines Verbindungsbolzens (3.6, 3.7) mit der Tür (1) verschraubt ist.

17. Verfahren zum Einbau eines Türmoduls nach Anspruch 1, **dadurch gekennzeichnet, dass** das Modul in der Zugangsöffnung zum Türhohlraum durch Einsetzen der Fensterheberführungen (2) in ihre End- oder Arbeitsstellung in der Tür entsprechend folgenden Schritten installiert wird:
• ausgehend von einer Stellung der mindestens zwei vorinstallierten Fensterheberführungen (2) am Türmodul (3), die vom Hauptkörper des Türmoduls mit Hilfe von einem oder zwei zeitweiligen Abstandsmitteln getrennt sind, wobei bei Verwendung von zwei Abstandsmitteln, einem oberen und einem unteren, besagte Abstandsmittel (3.3) unabhängig von den Verbindungsmitteln wirksam sind,
• das Türmodul (3) an der Tür (1) durch Neigen des Oberteils des Moduls (3) angesetzt wird, um zuerst alle oberen Enden der Fensterheberführungen (2) in den Türhohlraum (1) einzusetzen.
• Das Türmodul (3) wird bei bereits in den Türhohlraum (1) eingesetzten oberen Enden der Fensterheberführungen (2) soweit angehoben, bis die unteren Enden der Fensterheberführungen (2) durch Manövrieren derselben über der Oberseite der Unterkante (1.3) der Zugangsöffnung zum Türhohlraum (1) eingesetzt werden können,
• bei Verwendung von zwei Abstandsstücken (3.3), einem oberen und einem unteren, das obere soweit zusammengedrückt wird, bis der trennende Abstand auf den Endabstand vermindert ist,
• das Türmodul (3) abgesenkt wird, bis die vormontierten Bolzen (3.7.1) an den unteren Verbindungspunkten des Türmoduls (3) auf der Unterkante (1.3) der Zugangsöffnung zum Türhohlraum (1) aufliegen, wobei die geraden oder V-förmigen Kerben (1.3.1) diese aufnehmen und in ihre Endstellung führen,
• die jetzt korrekt positionierten oberen Verbindungen (3.6) dann festgezogen werden,
• die unteren Verbindungen (3.7) nach Einsetzen in die Einbaustellung festgezogen werden, so dass die Abstandsstücke (3.3) soweit zusammengedrückt werden, bis die Fensterheberführungen (2) zur gleichen Zeit ihre Endstellung erreicht haben.

18. Verfahren zum Einbau eines Türmoduls nach Anspruch 17, **dadurch gekennzeichnet, dass** die oberen Verbindungen (3.6) auf Grund eines klappbaren Abdeckelements (3.2) sichtbar zugänglich sind.

19. Verfahren zum Einbau eines Türmoduls nach Anspruch 1, **dadurch gekennzeichnet, dass** das Modul in die Zugangsöffnung zum Türhohlraum (1) durch Einsetzen der Fensterheberführungen (2) in ihre End- oder Arbeitsstellung mit den unteren Enden der Führungen (2) auf der Innenseite des Türhohlraums (1) und mit dem oberen Ende der Führungen (2) auf der Außenseite des Türhohlraums (1) entsprechend folgenden Schritten installiert wird:
• ausgehend von einer Stellung der mindestens zwei vorinstallierten Fensterheberführungen (2) am Türmodul (3), die vom Hauptkörper des Türmoduls mit Hilfe von einem oder zwei zeitweiligen Abstandsmitteln (3.3) getrennt sind, wobei bei Verwendung von zwei Abstandsmitteln, einem oberen und einem unteren, besagte Abstandsmittel (3.3) unabhängig von den Verbindungsmitteln wirksam sind,
• das Türmodul (3) an der Tür (1) durch Neigen des Oberteils des Moduls (3) zum Monteur hin angesetzt und abgesenkt wird, um das untere Ende der Fensterheberführungen im Inneren des Türkastens soweit einzuführen, bis der vormontierte Bolzen (3.7.1) der unteren Verbindung des Türmoduls (3) an der Unterkante (1.3) der Zugangsöffnung zum Türhohlraum (1) anliegt, an der die geraden oder V-förmigen Kerben (1.3.1) angeordnet sind, die diese aufnehmen und in ihre Endstellung führen,
• die oberen Enden in dem Bereich entsprechend den oberen Befestigungen positioniert werden,
• die jetzt korrekt positionierten oberen Verbindungen (3.6) anschließend festgezogen werden,
• die unteren Verbindungen (3.7) ohne Sicht, aber in geeigneter Weise geführt festgezogen werden, so dass die Abstandsmittel (3.3) gleichzeitig soweit zusammengedrückt werden, bis die Fensterheberführungen (2) ihre Endstellung erreicht haben.

20. Verfahren zum Einbau eines Türmoduls nach Anspruch 19, **dadurch gekennzeichnet, dass** die oberen Verbindungen (3.6) Dank eines klappbaren Abdeckelements (3.2) sichtbar zugänglich sind.

## Revendications

1. Module de porte (3) du type incorporant différents composants pré-installés, parmi lesquels, ils comprennent un système régulateur de fenêtre du type à câble avec au moins un guide (2), le module comprenant :
• des moyens supérieurs (3.6) et inférieurs (3.7) de connexion à la porte, où les moyens inférieurs consistent en des composants pré-installés dans le module, qui assure le module et la partie inférieure du au moins un guide (2) régulateur de fenêtre de porte, l'un à l'autre, le module étant **caractérisé en ce qu'**il comprend, en outre
• un ou plusieurs moyens (3.3) d'espacement temporaire entre le corps principal du module (3) et le au moins un guide (2) régulateur de fenêtre, les moyens d'espacement étant séparés des moyens de connexion.

2. Module de porte selon la revendication 1, **caractérisé en ce que** les composants pré-installés pour la connexion inférieure du guide (2) régulateur de fenêtre et le corps principal du module (3) sur la porte consistent en des boulons (3.7.1), l'extrémité desquels se vise dans un écrou (3.7.2) solidaire de l'extrémité inférieure du guide (2) régulateur de fenêtre, en laissant une section libre de goujon fileté du boulon (3.7.1) pré-installé dans l'intervalle à des fins d'installation sans accès visuel.

3. Module de porte selon la revendication 2, **caractérisé en ce que** la section libre du goujon fileté dans les moyens de connexion du guide (2) inférieur régulateur de fenêtre, il y a une douille (3.7.3) pour rigidifier la zone affaiblie par une entaille située dans la portion inférieure de l'encadrement de porte (1.3.1) dans lequel s'engage cette section de goujon fileté lorsqu'il est monté dans la porte.

4. Module de porte selon la revendication 1, **caractérisé en ce que** les moyens d'espacement (3.3) situés entre le guide (2) régulateur de fenêtre et le corps principal du module de porte (3) consiste en un évidement prismatique ouvert formé sur le corps principal effectif du module (3) qui loge un bloc élastique (3.4) où l'extrémité (2.1.1) d'un montant (2.1) qui émerge du guide (2) régulateur de fenêtre s'appuie sur ce bloc élastique (3.4).

5. Module de porte selon la revendication 4, **caractérisé en ce que** l'extrémité du montant (2.1) qui émerge du guide (2) est pliée sensiblement en parallèle au guide.

6. Module de porte selon la revendication 1, **caractérisé en ce que** les moyens d'espacement (3.3) entre le guide (2) régulateur de fenêtre et le corps principal du module de porte (3) consiste en un évidement prismatique ouvert formé sur le corps principal effectif du module (3) sur lequel est situé un bloc élastique perforé (3.5), mis en place à l'extérieur de l'évidement, qui permet le passage d'un montant (2.1) qui émerge du guide (2) comme un moyen de guidage, tandis que le bloc élastique (3.5) sur lequel s'appuie le guide (2) établit l'interstice entre le guide (2) régulateur de fenêtre et le corps principal du module de porte (3).

7. Module de porte selon la revendication 6, **caractérisé en ce que** le bloc élastique (3.5) s'appuie sur le corps principal du module.

8. Module de porte selon la revendication 6, **caractérisé en ce que** le bloc élastique (3.5) s'appuie sur des nervures extérieures situées sur l'évidement prismatique.

9. Module de porte selon la revendication 6, **caractérisé en ce que** l'extrémité du montant (2.1) qui émerge du guide (2) est pliée.

10. Module de porte selon la revendication 1, **caractérisé en ce que** les moyens d'espacement (3.3) entre le guide (2) régulateur de fenêtre et le corps principal du module de porte (3) consiste en un évidement prismatique ouvert formé sur le corps principal effectif du module (3) avec un canal latéral (3.3.2) présentant une striction (3.3.5), ce canal (3.3.2) étant destiné au passage d'une languette (2.1.1) solidaire de l'extrémité du montant (2.1) du guide (2) régulateur de fenêtre, de telle manière que la striction (3.3.5) offre de la résistance au passage de la languette (2.1.1) d'une extrémité à l'autre, en définissant deux positions relatives entre le guide (2) et le corps principal (3) du module : respectivement éloignée et proche l'une de l'autre.

11. Module de porte selon la revendication 10, **caractérisé en ce que** la striction (3.3.5) présente des cavités (3.3.3) sur les deux côtés qui donnent lieu à des sections flexibles (3.3.4) par rapport au passage de la languette (2.1.1).

12. Module de porte selon la revendication 1, **caractérisé en ce que** les montants (2.1) qui émergent du guide (2) régulateur de fenêtre pour être utilisés avec les moyens d'espacement (3.3) sont formés par l'estampage partiel d'une portion du corps (23) de guide et son pliage ultérieur.

13. Module de porte selon la revendication 1, **caractérisé en ce qu'**au moins un guide régulateur de fenêtre utilise un seul moyen d'espacement (3.3).

14. Module de porte selon la revendication 1, **caractérisé en ce qu'**au moins un guide régulateur de fenêtre utilise deux moyens d'espacement (3.3), un supérieur et un autre inférieur.

15. Module de porte selon la revendication 14, **caractérisé en ce que** le moyen d'espacement supérieur (3.3) consiste en une striction et l'inférieur consiste en un bloc élastique extérieur et intérieur (3.4, 3.5).

16. Module de porte selon la revendication 1, **caractérisé en ce qu'**un guide (2) régulateur de fenêtre est fixé au moyen d'une connexion (3.6, 3.7) boulonnée à la porte (1).

17. Procédé d'installation d'un module de porte selon la revendication 1, **caractérisé en ce que** le module est installé dans l'ouverture d'accès à la baie de porte en mettant en place les guides (2) régulateur de fenêtre à l'intérieur de la porte à leur position finale ou opérationnelle selon les étapes suivantes :
• en partant d'une position, des au moins deux guides (2) régulateurs de fenêtre pré-installés sur le module de porte (3), séparés du corps principal du module de porte par le biais d'un ou deux moyens d'espacement temporaire, si l'on en utilise deux, un supérieur et un autre inférieur, lesdits espaceurs (3.3) fonctionnant indépendamment des moyens de connexion,
• le module de porte (3) est présenté à la porte (1) en inclinant la partie supérieure du module (3) pour insérer premièrement les extrémités supérieures des guides (2) régulateurs de fenêtre dans la baie de porte (1),
• le module de porte (3) est légèrement élevé avec les extrémités supérieures des guides (2) régulateurs de fenêtre presque à l'intérieur de la baie de porte (1) jusqu'à ce que les extrémités inférieures des guides (2) régulateurs de fenêtre puissent s'insérer en les disposant sur la partie supérieure du bord inférieur (1.3) de l'ouverture qui fournit accès à la baie de porte (1),
• si l'on utilise deux espaceurs (3.3), un supérieur et un inférieur, le supérieur est comprimé jusqu'à ce que la distance de séparation se réduise à la distance finale,
• le module de porte (3) est abaissé jusqu'à ce que les boulons (3.7.1) pré-installés aux points de connexion inférieurs du module de porte (3) s'appuient sur le bord inférieur (1.3) de l'ouverture d'accès à la baie de porte (1), où les entailles sous forme de V droites ou inclinées (1.3.1) sont celles qui les reçoivent et les guident jusqu'à leur position finale,
• les connexions supérieures (3.6), maintenant correctement positionnées, sont alors serrées,
• une fois mises à leur position d'installation, les connexions inférieures (3.7) sont serrées, de manière à ce que les espaceurs (3.3) se compriment en même temps jusqu'à ce que les guides (2) régulateurs de fenêtre atteignent leur position finale.

18. Procédé d'installation d'un module de porte selon la revendication 17, **caractérisé en ce que** les connexions supérieures (3.6) sont visuellement accessibles grâce à un élément d'équilibrage pliant (3.2).

19. Procédé d'installation d'un module de porte selon la revendication 1, **caractérisé en ce que** le module est installé dans l'ouverture d'accès à la baie de porte (1) en mettant en place les guides (2) régulateur de fenêtre à leur position finale ou opérationnelle avec les extrémités inférieures des guides (2) à l'intérieur de la baie de porte (1) et les extrémités supérieures des guides (2) à l'extérieur de la baie de porte (1), selon les étapes suivantes :
• en partant d'une position, des au moins deux guides (2) régulateurs de fenêtre pré-installés sur le module de porte (3), séparés du corps principal du module de porte au moyen d'un ou deux moyens d'espacement temporaire, si l'on en utilise deux, un supérieur et un autre inférieur, lesdits espaceurs (3.3) fonctionnant indépendamment des moyens de connexion,
• le module de porte (3) est présenté à la porte (1) en inclinant la partie supérieure du module (3) vers l'opérateur et en l'abaissant pour insérer les extrémités supérieures des guides régulateurs de fenêtre à l'intérieur du boîtier de porte jusqu'à ce que le boulon (3.7.1) pré-installé dans la connexion inférieure du module de porte (3) s'appuie contre le bord inférieur (1.3) de l'ouverture d'accès à la baie de porte (1), où les entailles sous forme de V droites ou inclinées (1.3.1) sont situées pour les recevoir et les guider vers le bas jusqu'à leur position finale,
• les extrémités supérieures sont positionnées dans la zone correspondant aux attaches supérieures,
• les connexions supérieures (3.6), maintenant correctement positionnées, sont alors serrées,
• les connexions inférieures (3.7) sont serrées, sans accès visuel mais guidées adéquatement de manière à ce que les espaceurs (3.3) se compriment en même temps jusqu'à ce que les guides (2) régulateurs de fenêtre atteignent leur position finale.

20. Procédé d'installation d'un module de porte selon la revendication 19, **caractérisé en ce que** les connexions supérieures (3.6) sont visuellement accessibles grâce à un élément d'équilibrage pliant (3.2).
